# EUROPEAN PATENT SPECIFICATION

(11) **EP 3 820 266 B1**
(45) Date of publication and mention of the grant of the patent: **26.07.2023**
(21) Application number: 19752565.2
(22) Date of filing: 02.07.2019
(51) Int. Cl.: A01B 61/04, A01B 3/42

(54) **DIGGING PLOUGH**
TIEFENPFLUG
CHARRUE À LABOUR PROFOND

(30) Priority: 10.07.2018 IT 201800007058
(43) Date of publication of application: 19.05.2021
(73) Proprietor: Moro Aratri S.R.L., 24056 Fontanella (BG) (IT)
(72) Inventor: MORO, Andrea, 24056 FONTANELLA (BG) (IT)
(74) Representative: Garavelli, Paolo
(86) International application number: PCT/IT2019/000052
(87) International publication number: WO 2020/012513

(56) References cited:
- EP-A1- 0 448 442
- WO-A1-2016/075718
- DE-A1- 2 537 175
- DE-A1- 2 538 883
- DE-A1- 2 807 240
- DE-A1- 3 438 787
- FR-A1- 2 419 662
- US-A- 3 420 315

## Description

The present invention refers to a digging plough, adapted to reach depths higher than 70 cm.

When a plough enters the ground at rather high depths, high is also the risk of finding major obstacles, such as big stones buried in the ground, which generate intense and sudden overloads of the structures. This fact, joined to the ever increasing power of tractors, would be translated into irreversible damages to the structures should there not be means adapted to reduce such overloads.

The prior art provides for the use of the so-called "safety bolt", namely a sacrifice bolt which is aimed to be broken in case of overloading the structure, typical of obstacles or stones in the ground.

However, the use of such safety bolt does not completely solve the problem, since the carrier structures are safeguarded, but the problem, in this type of ploughs equipped with big-sized working bodies has been transferred to the working bodies themselves (the set of elements which can be found under the surface of the ground when working), which are subjected to violent impacts, which often cause major breakages and the interruption of works.

The working bodies are big-sized elements which generate the lateral overturning of the clod cut and lifted by the ploughshare. In this case, two working bodies are provided, one in the right part and one in the left part of the plough. These working bodies are assembled on a structure rotating around an horizontal and longitudinal axis, with respect to the traveling direction. The working bodies are assembled on said rotating structure so that, when a working body is in its working position, namely penetrates into the ground to perform the overturning of the clods, the other working body is reaching out upwards. This means that, when the tractor performs a working pass, overturning the clods, for example leftwards, when the pass is made in reverse, it must overturn the clods rightwards. In order to do this, the structure which supports the working bodies is rotated around said longitudinal axis. With this maneuver, the working body, which before was in the upper part, is now placed down, in order to penetrate into the ground and overturn the clods, now rightwards. To be able to efficiently perform their work, said working bodies have big sizes and are placed at a mutual distance of few centimeters. This means that, should the sacrifice bolt be broken, following an impact against a buried obstacle, the actively operating working body would be subjected to an upward rotation which takes it to bump into the other working body, namely the one in its passive phase.

A solution to the problem could be making the rotating structure so that the working body is moved upwards when it is in its passive phase to move it away from the one in its active phase, but this would imply that all equipment in passive phase is moved upwards, with an increase of weights, of costs and of the barycenter height, with negative consequences on the stability and the drivability of the machine.

Documents EP-A1-0 448 442 and DE-A1-34 38 787 disclose digging ploughs according to the preamble of Claim 1 and Claim 4.

Object of the present invention is solving the above prior art problems, by providing a digging plough in accordance with Claim 1 or, alternatively, Claim 4.

The above and other objects and advantages of the invention, as will result from the following description, are obtained with a digging plough as claimed in Claim 1 or Claim 4.

Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent, functionality) can be made to what is described, without departing from the scope of the invention as provided by the enclosed claims.

The present invention will be better described by some preferred embodiments thereof, provided as a non-limiting example, with reference to the enclosed drawings, in which:
- Figure 1 shows a digging plough according to the invention;
- Figure 2 shows the effect of the rotation of a working body if there is no safety device according to the invention;
- Figure 3 shows the effect of the rotation of a working body if there is a safety device according to the invention;
- Figures 4a, 4b show in detail the safety device according to the invention;
- Figure 5 shows a variation of the safety device according to the invention.

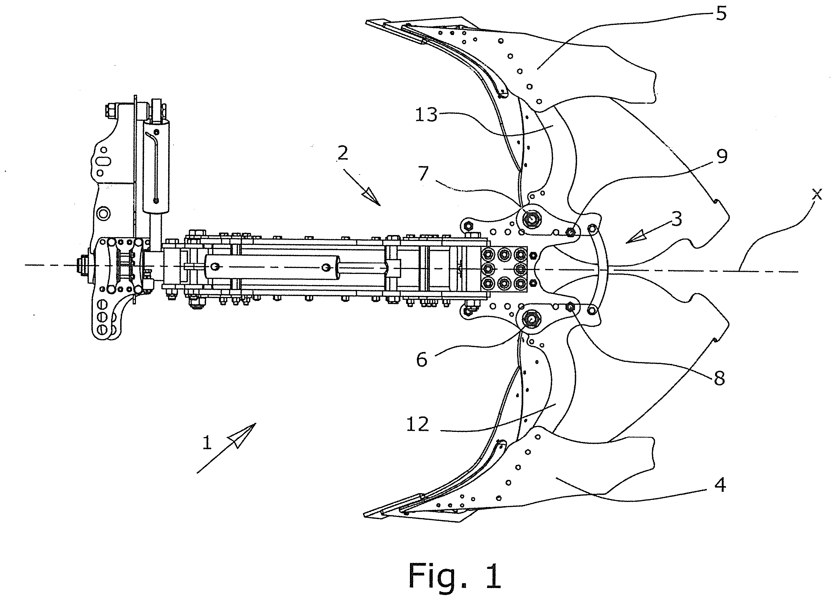

With reference to Figure 1, (1) designates a digging plough according to the invention.

The plough (1) comprises a supporting structure (2) and a safety device (3) for protecting a first working body (4) and a second working body (5).

The supporting structure (2) is rotatable around a horizontal and longitudinal axis (x) with respect to the travelling direction. The working bodies (4) and (5) are assembled on said rotatable structure so that, when a working body, for example the first working body (4), is in its working position, namely it penetrates into the ground to overturn the clods, the other one, namely the second working body (5), is reaching out upwards.

The alternative use of the two working bodies (4) and (5) is due to the need of alternatively overturn rightwards and leftwards the clods lifted by the plough (1), depending on the direction along which the plough (1) moves when it digs the furrow in the ground. In order to exchange the position of the two working bodies (4) and (5), the structure (2) which supports the working bodies is rotated around said longitudinal axis (x). With this maneuver, the working body which before was in the upper part, now is placed down, in order to penetrate into the ground, and vice versa.

These working bodies (4) and (5) are assembled on a first and a second pin (6) and (7), respectively. These pins (6) and (7) are horizontal and transverse with respect to the travelling direction of the tractor towing the plough (1). The rotation of the working bodies (4) and (5) around the pins (6) and (7) is prevented since each of the two working bodies (4) and (5) is prevented also by a first and a second safety bolt (8) and (9), respectively.

The safety bolts (8) and (9) are sized in order to be sheared, should the working body, which is in its working position, violently bump against an insuperable obstacle, for example a big stone buried in the ground.

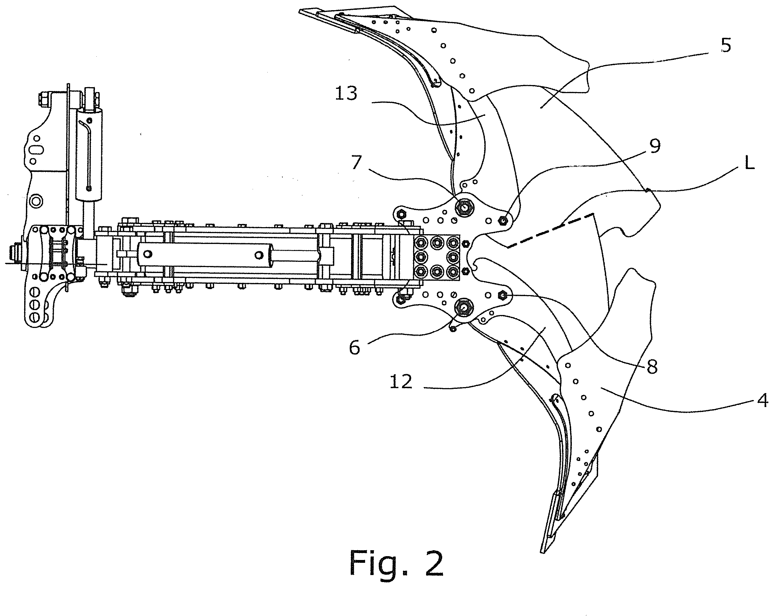

Figure 2 shows a case in which the first working body (4), which is in its working position, bumps against a big obstacle, for example a big stone buried in the ground. In this case, the bolt (8) breaks, allowing the backwards rotation of the first lower working body (4), thereby preserving the structures of the plough (1) from further yields.

However, in case of absence of the safety device (3) of the invention, the first lower working body (4) would bump against the second upper working body (5). In Figure 2, the dashed line (L) represents the geometric interference between the two working bodies (4) and (5). Actually, obviously, there would be an impact between the two working bodies with their consequent damaging.

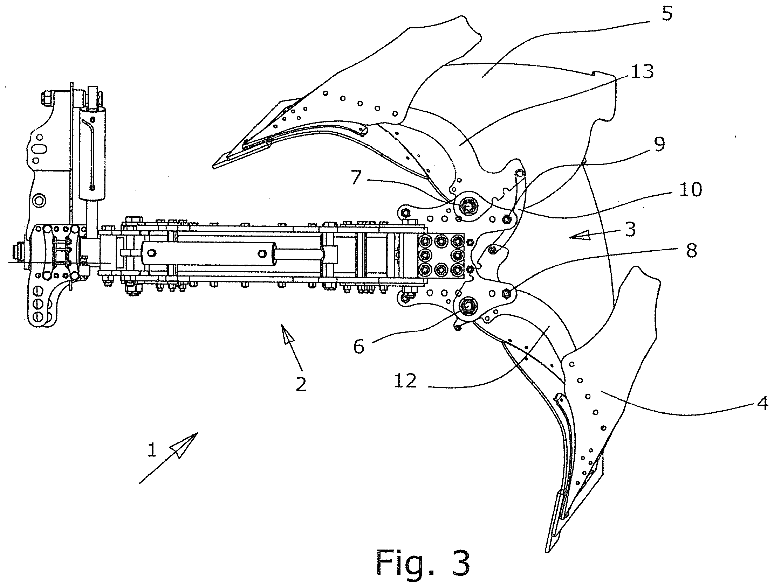

Figure 3 shows a case in which, when there is the safety device (3), the first lower working body (4), which is in its working position, bumps against a big obstacle buried in the ground. The bolt (8) breaks, the lower working body (4) rotates backwards and upwards, but does not bump against the second upper working body (5), because the plough (1) is equipped with said safety device (3). In fact, the two working bodies (4) and (5) are connected by a connecting rod (10) which impresses a rotation to the upper working body (5), around the pin (7), in order to move it away from the trajectory of the lower working body (4). In practice, the safety device (3) is adapted to generate a coordinate movement of the working bodies (4) and (5), such as to prevent a collision between said working bodies (4) and (5) when, due to the effect of an impact against a buried obstacle, and following the yield of the corresponding safety bolt, the working body which is in working phase rotates upwards.

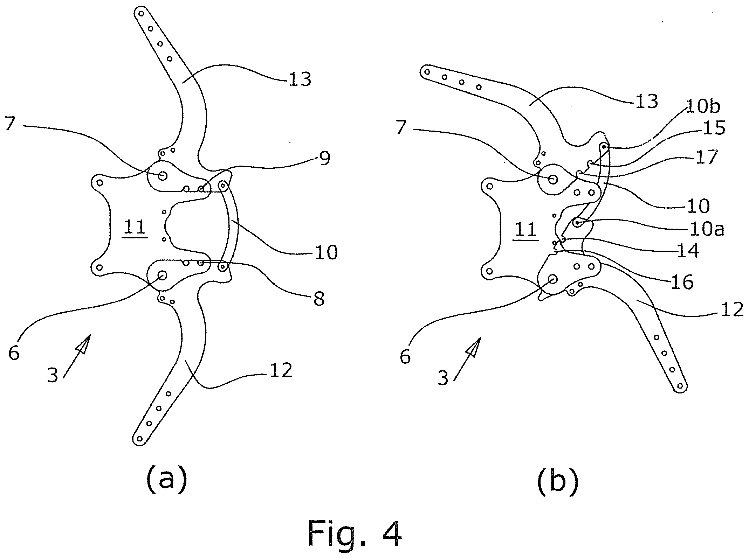

According to a preferred embodiment, said safety device (3), shown in detail in Figures 4a, 4b, comprises a supporting structure, for example a plate (11) integrally equipped with the supporting structure (2) of the plough (1), around which a first and a second lever (12) and (13) are hinged, respectively rotating with respect to said pins (6) and (7), on which the two working bodies (4) and (5) are assembled. In particular, the first lower lever (12) is fastened to the first lower working body (4), while the second upper lever (13) is fastened to the second upper working body (5).

Figure 4a shows the safety device (3) in its normal working configuration, with the two levers (12) and (13), and therefore the working bodies (4) and (5), symmetrically arranged with respect to the longitudinal axis (x). Under normal working conditions, the rotation of said levers (12) and (13), and therefore of the working bodies (4) and (5) is prevented by the safety bolts (8) and (9) . Said safety bolts (8) and (9) are sized in order to yield when the forces acting on the working body in its working phase, in the case shown in Figure 4b the lower working body (4), reach such a value as to put the integrity of the structure of the plough (1) at risk.

These levers (12) and (13) are mutually connected by said connecting rod (10), which connects a third pin (10a) on the first lower lever (12) with a fourth pin (10b) on the second upper lever (13).

When an overload condition of the structures occurs, the corresponding safety bolt in the working body which has bumped against the buried obstacle (the first lower working body (4) and the safety bolt (8) in the case shown), is sheared and the first lever (12) rotates backwards. This rotation of the first lever (12) generates, through the connecting rod (10), the rotation of the second upper lever (13) and therefore moves away the second upper working body (5) which thereby cannot be stricken by the first lower working body (4).

The impact against an obstacle of the lower working body (4) generates the yield of the safety bolt (8), ma not that of the safety bolt (9), since these safety bolts (8) and (9) engage not holes, but mutually facing open slits (14) and (15). The force exerted by the connecting rod (10) therefore will only generate a sliding of the upper safety bolt (9), which thereby disengages itself from the corresponding open slit (15).

According to a preferred embodiment, these open slits can also be equal to four. This means that, for every lever (12) and (13), there is a second open slit, respectively the second open slit (16), on the lower lever (12) and the second open slit (17) on the upper lever (13).

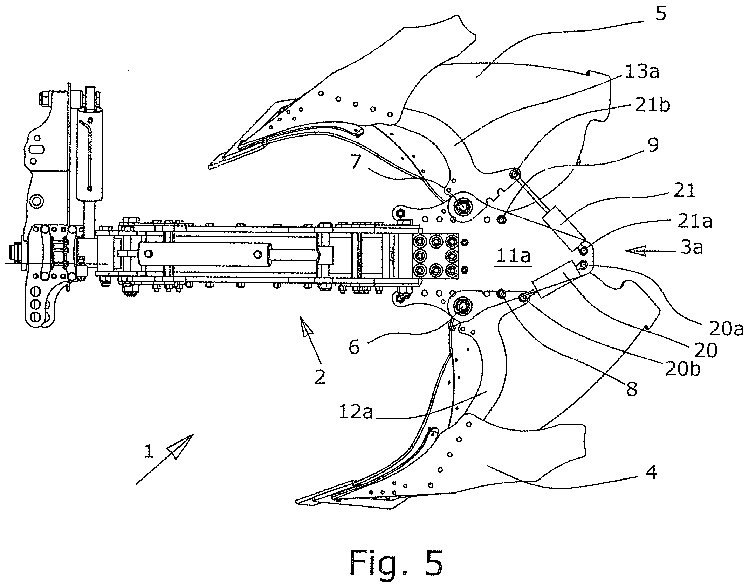

Figure 5 shows a variation (3a) of the safety system. This variation comprises a plate (11a) on which a first and a second lever (12a) (13a) are assembled, respectively connected to the working bodies (4) and (5). Like the levers (12) and (13) of the safety system (3), these levers (12a) and (13a) are assembled in order to be able to respectively rotate around the pins (6) and (7) and their rotation is prevented by the respective sacrifice bolts (8) and (9). The levers (12a) and (13a) are connected with said plate (11a) also by a first and a second actuator (20) and (21). In particular, the first actuator (20) connects a spot (20a) of the plate (11a) with a spot (20b) of the first lever (12a), while the second actuator (21) connects a spot (21a) of the plate (11a) with a spot (21b) of the second lever (13a).

According to this variation, the upper working body (5) is previously moved away from the trajectory of the lower working body (4) by acting on the second actuator (21). In this way, in case of impact against an insurmountable obstacle, the lower working body (4) rotates around the pin (6), but does not strike the upper working body (5), because this latter one has been previously moved away from its trajectory.

Obviously, when the two working bodies (4) and (5), following the rotation of the structure (2), invert their position, the actuators (20) and (21) are actuated in order to take the working body (5), which now is in the lower position, to its working position, and the working body (4), which now is in the upper position, is moved frontwards.

Such operation of restoring the position of one of the working bodies and of moving away the other working body, will have to be performed upon every rotation of the plough.

According to a further preferred embodiment (not shown), the positioning of the working bodies can also be performed manually, slackening the sacrifice bolt and providing for a suitable locking of the affected lever (12) or (13), for example using rods having a fixed length in place of the actuators (20) and (21).

As clearly appears from the previous description, the use of the safety device (3), or of its variation (3a), allows avoiding the mutual impact between the two working bodies following the rotation of the lower working body caused by an impact against an insurmountable obstacle. The damages following the impact are therefore reduced, upon shearing the safety bolt related to the working body in a working position. The simple replacement of the sheared safety bolt allows starting again to work within very short times.

## Claims

1. Digging plough (1), of a type comprising a first and a second working body (4, 5), assembled in order to alternatively work on a furrow dig by said plough (1), said plough (1) being equipped with first means configured to avoid damages to the structures in case of impacts of said working bodies (4, 5) against an obstacle buried in the ground, wherein said first means comprise a first and a second safety bolt (8, 9) configured to yield when forces applied to the structure of said plough (1) are so intense as to impair an integrity of said structure, said plough (1) further having second means (3) comprising a safety device (3) configured to generate a coordinate movement of said working bodies (4, 5), wherein said safety device (3) comprises:
- a plate (11) integrally assembled with a supporting structure (2) of said plough (1);
- a first lever (12), integral with said first working body (4), assembled on a first pin (6) of said plate (11), whose rotation is prevented by said first safety bolt (8);
- a second lever (13), integral with said second working body (5), assembled on a second pin (7) of said plate (11), whose rotation is prevented by said second safety bolt (9);
the digging plough being **characterised in that** said safety device comprises:
- a connecting rod (10) which connects a third pin (10a) on said first lever (12) with a fourth pin (10b) on said second lever (13),
wherein the connecting rod (10) is configured such that, when said first lever (12) is pushed backwards, having sheared said first safety bolt (8), the second lever (13) is made rotate upwards, moving away the corresponding second working body (5) from the first working body (4) and avoiding an impact between said working bodies (4, 5).

2. Digging plough (1) according to claim 1, **characterized in that** said first and second safety bolts (8, 9) are configured to engage mutually facing open slits (14, 15), so that an overload generates a yield of the safety bolt related to the working body (4 or 5) in its working phase, and the disengagement of the inactive working body (5 or 4) due to a sliding of the related safety bolt (9 or 8) with respect to the corresponding open slit (15 or 14).

3. Digging plough (1) according to claim 2, **characterized in that** it has a second open slit (16) on said first lever (12) and a second open slit (17) on said second lever (13).

4. Digging plough (1), of a type comprising a first and a second working body (4, 5), assembled in order to alternatively work on a furrow dig by said plough (1), said plough (1) being equipped with first means configured to avoid damages to the structures in case of impacts of said working bodies (4, 5) against an obstacle buried in the ground, wherein said first means comprise a first and a second safety bolt (8, 9) configured to yield when forces applied to the structure of said plough (1) are so intense as to impair an integrity of said structure, said plough (1) further having second means (3a) comprising a safety device (3a) configured to generate a coordinate movement of said working bodies (4, 5), wherein said safety device (3a), comprises:
- a plate (11a) integrally assembled with a supporting structure (2) of said plough (1);
- a first lever (12a), integral with said first working body (4), assembled on a first pin (6) of said plate (11a), whose rotation is prevented by said first safety bolt (8);
- a second lever (13a), integral with said second working body (5), assembled on a second pin (7) of said plate (11a), whose rotation is prevented by said second safety bolt (9); the digging plough being **characterised in that** said safety device comprises:
- a first actuator (20) which connects a spot (20a) of the plate (11a) with a spot (20b) of said first lever (12a);
- a second actuator (21) which connects a spot (21a) of the plate (11a) with a spot (21b) of said second lever (13a);
said first and second actuators (20, 21) being configured to act on their corresponding working bodies (4, 5) making them rotate around their respective pins (6, 7) when said first lever (12a) is pushed backwards, having sheared said first safety bolt (8), the second lever (13a) is made rotate upwards, moving away the corresponding second working body (5) from the first working body (4) and avoiding an impact between said working bodies (4, 5).

## Patentansprüche

1. Brechpflug (1) eines Typs, der einen ersten und einen zweiten Arbeitskörper (4, 5) umfasst, die so montiert sind, dass sie abwechselnd auf einer von dem Pflug (1) gegrabenen Furche arbeiten, wobei der Pflug (1) die mit ersten Mitteln versehen ist, die konfiguriert sind, um Schäden an den Strukturen im Fall von Stößen der Arbeitskörper (4, 5) gegen ein im Boden vergrabenes Hindernis zu vermeiden, wobei die ersten Mittel einen ersten und einen zweiten Sicherheitsbolzen (8, 9) umfassen, konfiguriert, um nachzugeben, falls die auf die Struktur des Pflugs (1) ausgeübten Kräfte so stark sind, dass die Unversehrtheit der Struktur beeinträchtigt wird, wobei der Pflug (1) auch zweite Mittel (3) aufweist, die eine Sicherheitsvorrichtung (3) konfiguriert, um eine koordinierte Bewegung der Arbeitskörper (4, 5) zu erzeugen, wobei die Sicherheitsvorrichtung (3) umfasst:
- eine Platte (11), die integral mit einer Stützstruktur (2) des Pfluges (1) montiert ist;
- einen ersten Hebel (12), einstückig mit dem ersten Arbeitskörper (4), montiert auf einem ersten Stift (6) der Platte (11), dessen Drehung durch den ersten Sicherheitsbolzen (8) verhindert wird;
- einen zweiten Hebel (13), einstückig mit dem zweiten Arbeitskörper (5), montiert auf einem zweiten Stift (7) der Platte (11), dessen Drehung durch den zweiten Sicherheitsbolzen (9) verhindert wird;
wobei der Einbruchpflug **dadurch gekennzeichnet ist, dass** die Sicherheitsvorrichtung umfasst:
- eine Verbindungsstange (10), die einen dritten Stift (10a) an dem ersten Hebel (12) mit einem vierten Stift (10b) an dem zweiten Hebel (13) verbindet,
wobei die Verbindungsstange (10) so konfiguriert ist, dass, wenn der erste Hebel (12) nach hinten gedrückt wird, nachdem der erste Sicherheitsbolzen (8) abgeschert wurde, der zweite Hebel (13) veranlasst wird, sich nach oben zu drehen und sich zu bewegen des entsprechenden zweiten Arbeitskörpers (5) von dem ersten Arbeitskörper (4) entfernt und eine Kollision zwischen den Arbeitskörpern (4, 5) vermieden wird.

2. Brechpflug (1) nach Anspruch 1, **dadurch gekennzeichnet, dass** die ersten und zweiten Sicherungsbolzen (8, 9) derart ausgebildet sind, dass sie in einander gegenüberliegende offene Schlitze (14, 15) eingreifen, so dass eine Überlastung verursacht ein Nachgeben des Sicherheitsbolzens in Bezug auf den Arbeitskörper (4 oder 5) während der Arbeit und das Lösen des inaktiven Arbeitskörpers (5 oder 4) aufgrund eines Schlupfes des relativen Sicherheitsbolzens (9 oder 8) in Bezug auf das entsprechende offene Knopfloch (15 oder 14).

3. Brechpflug (1) nach Anspruch 2, **dadurch gekennzeichnet, dass** er einen zweiten offenen Schlitz (16) an dem ersten Hebel (12) und einen zweiten offenen Schlitz (17) an dem zweiten Hebel (13) aufweist.

4. Brechpflug (1) eines Typs, der einen ersten und einen zweiten Arbeitskörper (4, 5) umfasst, die so angebracht sind, dass sie abwechselnd auf einer von dem Pflug (1) gegrabenen Furche arbeiten, wobei der Pflug (1) die mit ersten Mitteln versehen ist, die konfiguriert sind, um Schäden an den Strukturen im Fall von Stößen der Arbeitskörper (4, 5) gegen ein im Boden vergrabenes Hindernis zu vermeiden, wobei die ersten Mittel einen ersten und einen zweiten Sicherheitsbolzen (8, 9) umfassen, konfiguriert, um nachzugeben, falls die auf die Struktur des Pflugs (1) ausgeübten Kräfte so stark sind, dass die Unversehrtheit der Struktur beeinträchtigt wird, wobei der Pflug (1) auch zweite Mittel (3) aufweist, die eine Sicherheitsvorrichtung (3) konfiguriert, um eine koordinierte Bewegung der Arbeitskörper (4, 5) zu erzeugen, wobei die Sicherheitsvorrichtung (3) umfasst:
- eine Platte (11a), die integral mit einer Stützstruktur (2) des Pfluges (1) montiert ist;
- einen ersten Hebel (12a), einstückig mit dem ersten Arbeitskörper (4), montiert auf einem ersten Stift (6) der Platte (11a), dessen Drehung durch den ersten Sicherheitsbolzen (8) verhindert wird;
- einen zweiten Hebel (13a), einstückig mit dem zweiten Arbeitskörper (5), montiert auf einem zweiten Stift (7) der Platte (11a), dessen Drehung durch den zweiten Sicherheitsbolzen (9) verhindert wird; wobei der Einbruchpflug **dadurch gekennzeichnet ist, dass** die Sicherheitsvorrichtung umfasst:
- ein erstes Stellglied (20), das einen Punkt (20a) der Platte (11a) mit einem Punkt (20b) des ersten Hebels (12a) verbindet;
- ein zweites Stellglied (21), das einen Punkt (21a) der Platte (11a) mit einem Punkt (21b) des zweiten Hebels (13a) verbindet;
wobei die ersten und zweiten Aktuatoren (20, 21) so konfiguriert sind, dass sie auf die entsprechenden Arbeitskörper (4, 5) einwirken und bewirken, dass sie sich um die jeweiligen Stifte (6, 7) drehen, wenn der erste Hebel (12a) ist nach hinten gedrückt wird, nachdem der erste Sicherheitsbolzen (8) abgeschert wurde, wird der zweite Hebel (13a) veranlasst, sich nach oben zu drehen, wodurch der entsprechende zweite Arbeitskörper (5) von dem ersten Arbeitskörper (4) wegbewegt wird und eine Kollision zwischen den Arbeitskörpern vermieden wird Körper (4, 5).

## Revendications

1. Charrue défonceuse (1), d'un type comprenant un premier et un deuxième corps de travail (4, 5), montés de manière à travailler alternativement sur un sillon creusé par ladite charrue (1), ladite charrue (1) étant pourvu de premiers moyens configurés pour éviter d'endommager les structures en cas d'impacts desdits organes de travail (4, 5) contre un obstacle enfoui dans le sol, dans lequel lesdits premiers moyens comprennent un premier et un second verrou de sécurité (8, 9) configurée pour céder dans le cas où les efforts appliqués à la structure de ladite charrue (1) sont si intenses qu'ils compromettent l'intégrité de ladite structure, ladite charrue (1) comportant également des deuxièmes moyens (3) comprenant un dispositif de sécurité ( 3) configuré pour générer un mouvement coordonné desdits corps de travail (4, 5), dans lequel ledit dispositif de sécurité (3) comprend:
- un plateau (11) solidaire d'une structure porteuse (2) de ladite charrue (1);
- un premier levier (12), solidaire dudit premier corps de travail (4), monté sur un premier axe (6) dudit plateau (11), dont la rotation est empêchée par ledit premier verrou de sécurité (8);
- un second levier (13), solidaire dudit second corps de travail (5), monté sur un second axe (7) dudit plateau (11), dont la rotation est empêchée par ledit second verrou de sécurité (9);
la charrue anti-effraction étant **caractérisée en ce que** ledit dispositif de sécurité comprend:
- une biellette (10) qui relie un troisième axe (10a) sur ledit premier levier (12) à un quatrième axe (10b) sur ledit deuxième levier (13),
dans lequel la bielle (10) est configurée de telle manière que, lorsque ledit premier levier (12) est poussé vers l'arrière, après avoir cisaillé ledit premier boulon de sécurité (8), le deuxième levier (13) est amené à tourner vers le haut, en déplaçant le deuxième corps de travail correspondant (5) éloigné du premier corps de travail (4) et évitant une collision entre lesdits corps de travail (4, 5).

2. Charrue défonceuse (1) selon la revendication 1, **caractérisée en ce que** lesdits premier et deuxième boulons de sécurité (8, 9) sont configurés de manière à engager des fentes ouvertes (14, 15) opposées l'une à l'autre, de telle sorte qu'une surcharge provoque un fléchissement du pêne de sécurité relatif au corps de travail (4 ou 5), pendant le travail, et le désengagement du corps de travail inactif (5 ou 4) dû au glissement du pêne de sécurité relatif (9 ou 8) par rapport à la boutonnière ouverte correspondante (15 ou 14).

3. Charrue défonceuse (1) selon la revendication 2, **caractérisée en ce qu'**elle comporte une seconde fente ouverte (16) sur ledit premier levier (12) et une seconde fente ouverte (17) sur ledit second levier (13).

4. Charrue défonceuse (1), d'un type comprenant un premier et un deuxième corps de travail (4, 5), montés de manière à travailler alternativement sur un sillon creusé par ladite charrue (1), ladite charrue (1) étant pourvu de premiers moyens configurés pour éviter d'endommager les structures en cas d'impacts desdits organes de travail (4, 5) contre un obstacle enfoui dans le sol, dans lequel lesdits premiers moyens comprennent un premier et un second verrou de sécurité (8, 9) configurée pour céder dans le cas où les efforts appliqués à la structure de ladite charrue (1) sont si intenses qu'ils compromettent l'intégrité de ladite structure, ladite charrue (1) comportant également des deuxièmes moyens (3) comprenant un dispositif de sécurité ( 3) configuré pour générer un mouvement coordonné desdits corps de travail (4, 5), dans lequel ledit dispositif de sécurité (3) comprend:
- un plateau (1 1a) solidaire d'une structure porteuse (2) de ladite charrue (1);
- un premier levier (12a), solidaire dudit premier corps de travail (4), monté sur un premier axe (6) dudit plateau (1 1a), dont la rotation est empêchée par ledit premier pêne de sécurité (8);
- un second levier (13a), solidaire dudit second corps de travail (5), monté sur un second axe (7) dudit plateau (11a), dont la rotation est empêchée par ledit second verrou de sécurité (9); la charrue anti-effraction étant **caractérisée en ce que** ledit dispositif de sécurité comprend:
- un premier actionneur (20) qui relie un point (20a) de la plaque (1 1a) à un point (20b) dudit premier levier (12a);
- un second actionneur (21) qui relie un point (21a) de la platine (11a) à un point (21b) dudit second levier (13a);
lesdits premier et second actionneurs (20, 21) étant configurés de manière à agir sur les corps de travail correspondants (4, 5) les faisant tourner autour des broches respectives (6, 7) lorsque ledit premier levier (12a) est poussé vers l'arrière, après avoir cisaillé ledit premier boulon de sécurité (8), le second levier (13a) est amené à tourner vers le haut, éloignant le second corps de travail correspondant (5) du premier corps de travail (4) et évitant une collision entre ledit corps de travail corps (4, 5).
